# EUROPEAN PATENT APPLICATION

(11) **EP 2 328 293 A2**
(43) Date of publication of application: **01.06.2011**
(21) Application number: 10014159.7
(22) Date of filing: 29.10.2010
(51) Int. Cl.: H04L 1/00

(54) **Variable rate twisted pair, backplane and direct attach copper physical layer devices**

(30) Priority: 25.11.2009 US 625700
(71) Applicant: Broadcom Corporation, Irvine, CA 92617 (US)
(72) Inventor: Diab, Wael, William, San Francisco, CA 94109 (US); Powell, Scott, Alisa Viejo, CA 92656 (US)
(74) Representative: Jehle, Volker Armin

(57) **Abstract**

Variable rate twisted pair, backplane and direct attach copper physical layer devices (PHYs). A variable-rate PHY can be designed to identify a mode of operation based on identified characteristics of a communication channel. The identified mode of operation can support a data rate lower than that of a connected media access control (MAC). The lower data rate promotes reuse of legacy media and existing MACs.

## Description

### BACKGROUND

### Field of the Invention

The present invention relates generally to Ethernet systems and, more particularly, to variable rate twisted pair, backplane and direct attach copper physical layer devices.

### Introduction

Ethernet devices continue to evolve in capability as the incremental increases in the standardized transmission rates have progressed by orders of magnitude. For example, in a relatively short period of time, transmission rates for standardized twisted pair Ethernet devices have progressed from 10 Mbit/s to 100 Mbit/s, from 100 Mbit/s to 1 Gbit/s, and more recently, 1 Gbit/s to 10 Gbit/s. For the twisted-pair cabling example, efforts are ongoing to identify the next highest transmission rate.

One of the challenges in standardizing the next highest transmission rate is the accommodation of large variances in the characteristics of the communication channel between a pair of Ethernet devices. For example, the next standard for a transmission rate of 40 Gbit/s over twisted-pair cabling would be expected to cover a link distance up to 100 meters. This worst-case link distance would be consistent to prior standards that define transmission rates of 10 Gbit/s, 1 Gbit/s, 100 Mbit/s, etc. over twisted-pair cabling. Another example of a large variance in the characteristics of the communication channel is the type of cabling employed.

As Ethernet PHY technology has advanced, so also has the cabling technology. Various types of Ethernet-compatible cabling exist. For example, performance characteristics represented by Category 3 unshielded twisted pair cabling enabled 10BASE- T transmission but not 100BASE-TX transmission, which required performance characteristics exhibited by Category 5 or 5e cabling. Category 6 cabling was then defined as the cable standard for supporting 1000BASE-T operation. Since that time, cabling advancements have led to advanced Category 6A, 7, 7A, which can support frequencies up to 1 Ghz, and enhanced 7A or newer cabling, which can support frequencies up to 2 Ghz and beyond.

For a future standard such as 40GBASE-T, it is believed that Category 7, 7A and enhanced 7A cabling can support 40 Gbit/s transmission at distances up to 100 meters. In addressing the large variances in the link distance supported and the type of cabling, any future 40GBASE-T standard would be designed to identify a maximum distance (e.g., 100 meters) and a minimum performance for the cabling (e.g., Category 7 or better). Between the specification of a worst-case link distance and the minimum performance characteristics of the cabling, much potential variance exists in the characteristics of the communication channel.

The large variances in the communication channel serve to restrict potential applications. This is especially true when considering legacy-cabling technologies that can be locked out of next-generation transmission applications. This represents a huge loss in investment as forced obsolescence is incurred for installed cabling infrastructure that has not yet reached its maximum age in its lifespan of usefulness. What is needed therefore is a PHY mechanism that can leverage such variances in the characteristics of the communication channel to thereby save on cost and complexity, while also maximizing the utility of legacy media. According to an aspect of the invention, a method is provided in a physical layer device that is coupled to a media access control layer that operates at a predefined first data rate, comprising:
identifying characteristics of a communication channel that enables communication of said physical layer device with a link partner device;
selecting an operating mode for said physical layer device based on said identified characteristics of said communication channel, said selected operating mode supporting a second data rate that is less than said predefined first data rate of said media access control layer;
asserting, while said physical layer device is transmitting at said second data rate, a carrier deferral signal from said physical layer device to said media access control layer, said carrier deferral signal indicating to said media access control layer that transmission of data is to be deferred; and
deasserting said carrier deferral signal after it is determined that an imbalance created by the difference between said predefined first data rate and said second data rate has been addressed.

Advantageously, said predefined link rate is one of 10 Gbit/s, 40 Gbit/s and 100 Gbit/s.

Advantageously, said selecting comprises selecting an operating mode that supports a second data rate greater than 1 Gbit/s when said predefined link rate is 10 Gbit/s, or selecting an operating mode that supports a second data rate greater than 10 Gbit/s when said predefined link rate is 40 Gbit/s, or selecting an operating mode that supports a second data rate greater than 40 Gbit/s when said predefined link rate is 100 Gbit/s.

Advantageously, said identifying comprises identifying characteristics of a twisted pair link, backplane link, or direct attach copper link.

Advantageously, said identifying comprises receiving an indication of said communication channel from a management interface.

Advantageously, said identifying comprises measuring one or more channel characteristics by said physical layer device.

Advantageously, said identifying comprises identifying in cooperation with said link partner device.

Advantageously, said identifying comprises identifying a type of cabling.

Advantageously, said identifying comprises identifying a length of cabling.

Advantageously, said asserting comprises setting a carrier deferral variable via software.

According to an aspect, a method is provided in a physical layer device that is coupled to a media access control layer that operates at a predefined first data rate, comprising:
selecting an operating mode for said physical layer device based on identified characteristics of a communication channel that couples said physical layer device to a link partner device, said selected operating mode supporting a second data rate that is less than said predefined first data rate of said media access control layer; and
asserting, while said physical layer device is transmitting at said second data rate, a backpressure signal from said physical layer device to said media access control layer, said backpressure signal indicating to said media access control layer that transmission of data is to be adjusted due to an imbalance created by the difference between said predefined first data rate and said second data rate.

Advantageously, said predefined link rate is one of 10 Gbit/s, 40 Gbit/s and 100 Gbit/s.

Advantageously, said selecting comprises selecting an operating mode that supports a second data rate greater than 1 Gbit/s when said predefined link rate is 10 Gbit/s, or selecting an operating mode that supports a second data rate greater than 10 Gbit/s when said predefined link rate is 40 Gbit/s, or selecting an operating mode that supports a second data rate greater than 40 Gbit/s when said predefined link rate is 100 Gbit/s.

Advantageously, said selecting comprises selecting based on a type of cabling.

Advantageously, said selecting comprises selecting based on a length of cabling.

Advantageously, said asserting comprises asserting a carrier deferral signal.

Advantageously, said asserting comprises setting a backpressure variable via software.

According to a further aspect, a physical layer device comprises:
an interface to a media access control layer, said interface operating at a predefined first data rate;
a measurement module that measures one or more characteristics of a communication channel that links said physical layer device to a link partner device; and
a controller that selects an operating mode for said physical layer device based on said one or more measurements, said selected operating mode having a second data rate that is less than said predefined data rate, said controller also being designed to generate a backpressure signal that indicates to said media access control layer that transmission of data is to be adjusted due to an imbalance created by the difference between said predefined first data rate and said second data rate.

Advantageously, said backpressure signal is a carrier deferral signal.

Advantageously, said characteristic is a type of cable.

Advantageously, said characteristic is a length of cable.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered limiting of its scope, the invention will be described and explained with additional specificity and detail through the use of the accompanying drawings in which:

FIG. 1 illustrates an example of an end-to-end Ethernet link.

FIG. 2 illustrates an example of a controller.

FIG. 3 illustrates an example of a switch.

FIG. 4 illustrates an example of an end-to-end Ethernet link having variable rate physical layer devices.

FIG. 5 illustrates a flowchart of a process of the present invention.

### SUMMARY

Variable rate twisted pair, backplane and direct attached copper physical layer devices, substantially as shown in and/or described in connection with at least one of the figures, as set forth more completely in the claims.

### DETAILED DESCRIPTION

Various embodiments of the invention are discussed in detail below. While specific implementations are discussed, it should be understood that this is done for illustration purposes only. A person skilled in the relevant art will recognize that other components and configurations may be used without parting from the spirit and scope of the invention.

Ethernet has become an increasingly pervasive technology that has been applied in various contexts, including twisted pair, backplane, and direct attach copper applications. Transmission rates continue to increase in large steps along with the corresponding increase in cost and complexity for such implementations. For example, in the twisted-pair context, the current state of the art physical layer device (PHY) technology is the 10GBASE-T standard, which provides a specification for a data transmission rate at 10 Gbit/s. Future implementations such as 20GBASE-T, 40GBASE-T, 100GBASE-T, etc. that facilitate data transmission rates beyond 10 Gbit/s are expected on the near-term horizon.

As would be appreciated, any next generation of Ethernet communication technology will be met with substantial technical challenges. Leaps in the transmission-rate capacity of such next-generation devices is often dependent on similar advances in the media called upon to support such next-generation devices. The question then becomes whether the benefits gained by such increased transmission bandwidth justifies the corresponding loss in the prior investment of previous generations of devices. Many tradeoffs exist.

In the present invention, variable rate twisted pair, backplane and direct attach copper PHYs are provided that can increase their utility amongst a large variance of media applications. Such increased utility serves to reduce many of the cost and complexity burdens that would be incurred in the deployment of next-generation devices.

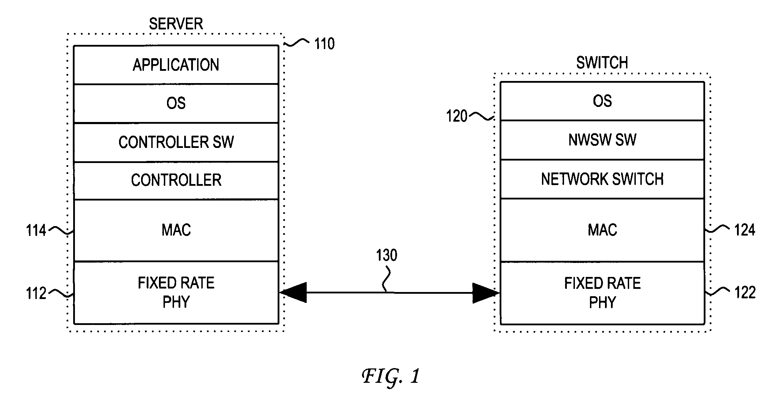

To illustrate the features of the present invention, reference is made first to the end-to-end Ethernet link of FIG. 1. As illustrated in FIG. 1, server 110 is coupled to switch 120 by link 130.

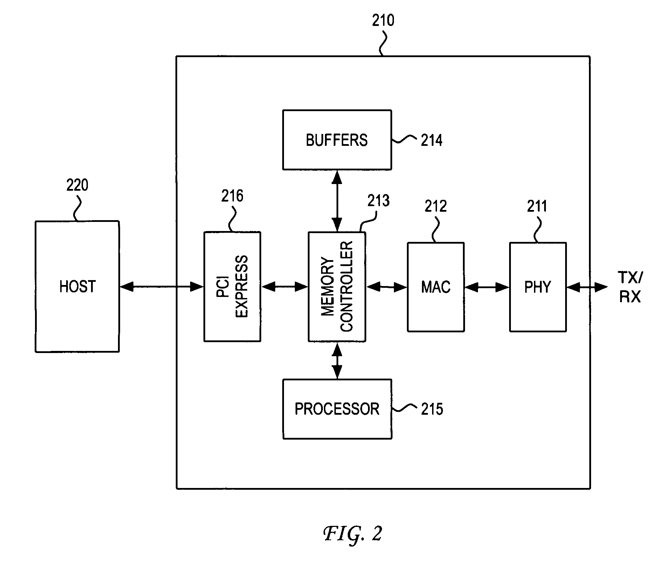

FIG. 2 illustrates one example of a controller such as that within server 110. As would be appreciated, a controller can generally be part of a client (e.g., laptop, desktop or workstation), a server (e.g., audio-video (AV) server, high performance computing (HPC) server), or a consumer edge device (e.g., HDTV, Blueray, etc.). As illustrated, host system 220 is coupled to integrated Ethernet controller 210. Ethernet controller 210 further includes PHY 211, which is coupled to media access control (MAC) 212. In the illustrated example, MAC 212 is coupled to PCI Express device 216 via memory controller 213, which is also coupled to buffers 214 and processor 215.

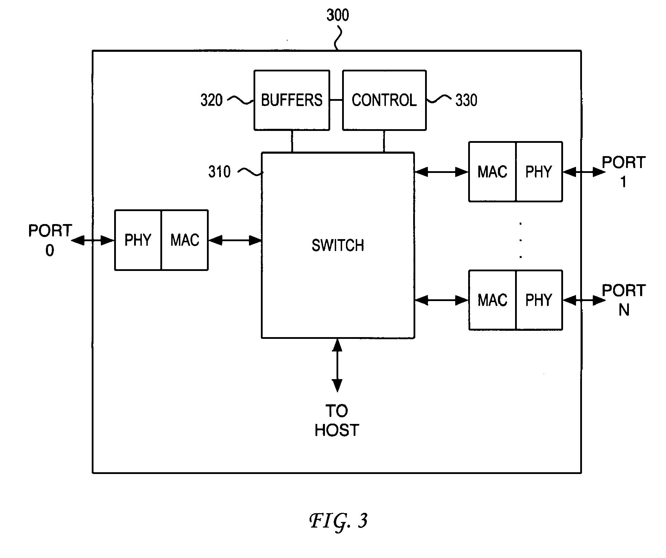

FIG. 3 illustrates one example of a network switch. In various examples, switching system 300 can represent a router or any other device that incorporates multi-port switch functionality. In various examples, the switch can be a consumer, SMB, enterprise, metro, or access switch. In another example, switching system 300 can represent a voice over IP (VoIP) chip that has a network interface (Port 0) and a PC interface (Port 1). In yet another example, switching system 300 can represent a customer premise equipment (CPE) device in a service provider access network that can have an optical central office (CO) facing interface (Port 0) and multiple interfaces (Ports 1-N) that are facing the home and/or gateway (e.g., the CPE can simply be a media converter and/or part of the home gateway). Still further, switching system 300 can represent an access point such as a WLAN base station. As illustrated, switching system 300 includes switch 310 that supports a host connection (e.g., internal port) and a plurality of external ports 0-N via MAC and EEE PHY interfaces. Switch 310 is also supported by buffers 320 and control 330.

Returning to FIG. 1, link 130 couples PHY 112 of server 110 to PHY 122 of switch 120. Conventionally, twisted pair, backplane and direct attach copper PHYs are fixed-rate PHYs. Fixed-rate PHYs are designed to operate with a MAC at a common fixed data rate. For example, fixed-rate PHY 112 can be designed to operate with MAC 114 and fixed-rate PHY 122 can be designed to operate with MAC 124 at a fixed data rate of 2.5 Gbit/s, 10 Gbit/s, 20 Gbit/s, 40 Gbit/s, 100 Gbit/s, etc. As would become evident, the principles of the present invention can be applied to a PHY operating at any current or future data rate that is standardized or non-standardized.

Fixed-rate PHYs are limited in that they are typically required to operate at the MACs full data rate. Thus, for example, a fixed-rate PHY that is coupled to a 40 Gbit/s MAC would be required to operate at the fixed data rate of 40 Gbit/s. This restriction imposed by the conventional matching of the data rates of the MAC and PHY is disadvantageous because it requires the PHY to operate at the full MAC data rate. This can be inefficient when the needs of the PHY dictate that only a partial speed increase over the previous generation of PHY devices is required. For example, even if the needs of the PHY dictate that 20 Gbit/s operation would be sufficient, the PHY would be required to operate at 40 Gbit/s to match the MAC data rate. The alternative would be to require a special MAC that operates at 20 Gbit/s. This alternative is impractical due to the large costs that would be imposed by the unnecessarily frequent migration of MAC devices in the IT infrastructure.

Another consequence of having a fixed-rate PHY that operates at the MAC data rate is the potential limitations in backwards compatibility with legacy media. As noted, advancement in cabling technology has led to continual improvement in performance specifications. For example, advancement in twisted pair cabling has led to a variety of cable types, notably, Category 3, 5, 5e, 6, 6A, 7, 7A, enhanced 7A, 8, etc. cabling. As data rates have continued to increase, so also has the minimum performance requirement placed on the supporting media. For example, 1000BASE-T operation at 100 meters requires a minimum of Category 6 cabling, 10GBASE-T operation at 100 meters requires a minimum of Category 6A cabling, while it is believed that 40GBASE-T operation at 100 meters would require a minimum of Category 7 cabling.

As each new generation of PHY data rates is introduced, more legacy media becomes incompatible. These limitations in backwards compatibility are especially costly when considering the costs of re-wiring the cabling infrastructure. Migration of PHY devices can then require a co-migration of cabling infrastructure, which would significantly add to deployment costs.

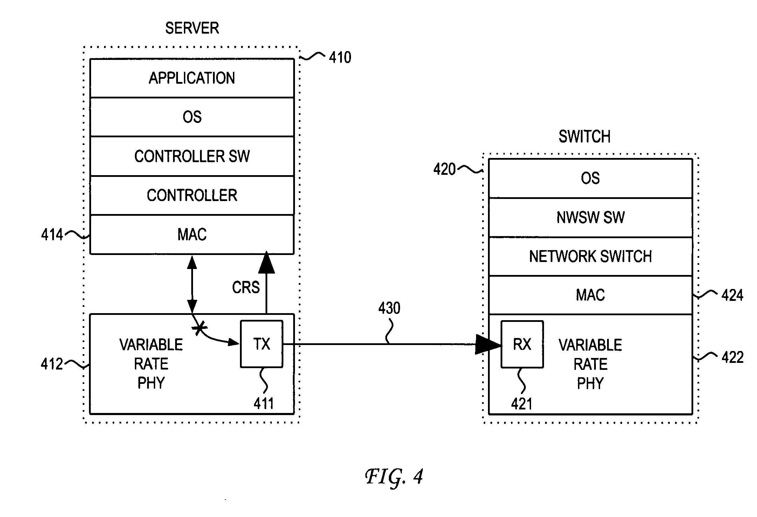

It is therefore a feature of the present invention that the limitations introduced by conventional fixed-rate PHYs are alleviated by the inclusion of variable-rate PHYs. FIG. 4 illustrates an example configuration of an end-to-end link that incorporates variable-rate PHYs. In the illustration of FIG. 4, only a single direction 430 of a full duplex link is shown where transmitter (TX) 411 in variable-rate PHY 412 in server 410 transmits traffic to receiver (RX) 421 in variable-rate PHY 421 in switch 420. As would be appreciated, the principles of the present invention can be applied to both directions of the link.

One of the characteristics of variable-rate PHYs 412, 422 is that the data rate of variable-rate PHYs 412, 422 is not dependent on the data rate of MACs 414, 424, respectively. In the present invention, variable-rate PHYs can select a particular data rate based on the characteristics of the communication channel. Such a selected data rate of variable rate PHYs 412, 422 can be lower than the data rate of the corresponding MACs 414, 424. For example; where variable-rate PHY 412 is connected to MAC 414 that operates at a data rate of 40 Gbit/s, variable-rate PHY 412 can select a data rate of 20 Gbit/s. Significantly, as the variable selected data rate can be based on the characteristics of the communication channel, the variable-rate PHYs of the present invention can interoperate with legacy media.

Typically, the cabling requirements for a particular PHY (e.g., 1000BASE-T, 10GBASE-T, etc.) are designed to meet a worst case channel conditions. For example, 10GBASE-T assumes a minimum of Category 6A cabling to accommodate link distances up to a worst case 100 meters. This 100 meter worst-case distance requirement that is imposed on the cabling can be harsh when compared with other potential applications. For example, a data center application can use link distances that are significantly shorter than 100 meters. When the actual link distance, or more generally the characteristics of the communication channel, is not considered, unnecessary costs and constraints are imposed.

It is therefore a feature of the present invention that a variable-rate PHY can negotiate a lower data rate as compared to the MAC. In one embodiment, this negotiated lower data rate is identified based on the characteristics of the communication channel. Significantly, the negotiated lower data based on the characteristics of the communication channel can often accommodate links based on legacy media. For example, a PHY that operates on a legacy medium can accommodate significantly longer link distances when lowering the data rate, or can accommodate lower quality cabling when lowering the data rate. Significantly, this lower data rate can still be significantly higher than the next lower speed step. For example, a PHY operating with a 40 Gbit/s MAC can negotiate to a data rate of 20 Gbit/s, which is twice the data rate of the next lower speed step of 10 Gbit/s.

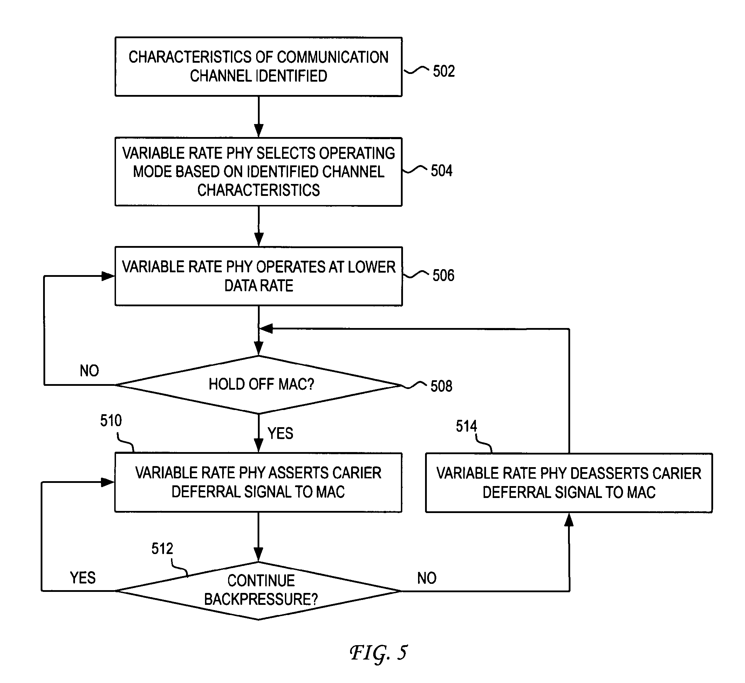

To illustrate the features of the present invention, reference is now made to the flowchart of FIG. 5, which is described in relation to the end-to-end link of FIG. 4. As illustrated, the process begins at step 502 where the characteristics of the communication channel are identified. In one embodiment, the characteristics of the communication channel are identified based on measurements of the communication channel. For example, insertion loss, cross-talk, time domain reflectometry (TDR), etc. measurements can be performed by an echo cancellation module in the PHY. These channel measurements can then be used to identify the characteristics of the channel. It should be noted that this process can vary between implementations because of the different ways in which a measurement can be used as an indication of a channel characteristic.

In one embodiment, the measurement can provide a direct indication of a channel characteristic. For example, a TDR measurement can provide a direct indication of the length of the cabling. In another embodiment, the measurement can provide an indirect indication of a channel characteristic. For example, an insertion loss or cross-talk measurement can provide an indication of a cable type (e.g., Category 3 or Category 5 cabling). The indicated cable type can then be used as a proxy in identifying the channel characteristics of the cabling. As would be appreciated, the principles of the present invention can be applied to various installation scenarios where a non-standardized form of cabling may be used. Regardless of the method by which the measurements are correlated to the channel characteristics, the result of step 502 is an identification of such channel characteristics (e.g., cabling type, cable length, type of connectors, etc.). This process can, be performed in isolation by a single PHY, or in combination with measurements and other data provided by the PHY on the other end of the link.

In one embodiment, the channel characteristics can also be defined by a user such as a member of the IT department. For example, this user can identify the type and length of cabling, which information can be made available to the PHYs through a management register.

After the characteristics of the communication channel have been identified at step 502, the variable-rate PHY then selects an operating mode based on the identified channel characteristics. To illustrate this process, consider the example of a variable-rate PHY that is coupled to a 40 Gbit/s MAC. The variable-rate PHY can choose an operating mode that supports a 40 Gbit/s data rate when the channel characteristics indicate support for such a data rate. When the identified channel characteristics do not indicate support for the full 40 Gbit/s data rate (e.g., legacy media), then the variable-rate PHY can identify an operating mode that operates at a data rate lower than 40 Gbit/s.

In one embodiment, the variable-rate PHY can be designed to select from a plural set of operating modes that enable operation at a data rate supported by the communication channel indicated by the channel characteristics. For example, an autonegotiation-type process can select a 40 Gbit/s data rate if Category 7A cabling is detected, select a 40 Gbit/s data rate if 15 meters of Category 6A cabling is detected, select a 20 Gbit/s data rate if 30 meters of Category 6A cabling is detected, etc. In general, the large number of variations in operating modes is due to the large variations in legacy media that can also be used between the variable-rate PHYs.

In one example, the particular set of supported operating modes can be determined by beneficial (e.g., prevalent) legacy media scenarios that cannot meet the stated requirements for a particular data rate (e.g., 40 Gbit/s) at a worst-case cabling length (e.g., 100m). For example, it may be determined that supporting a particular operating mode that can work with 15 meters of Category 6A cabling having Category 7/7A connectors would be beneficial. As would be appreciated, the particular mapping between particular operating modes and channel conditions would be implementation dependent for a given variable-rate PHY.

As noted, the process at step 504 can be effected through an autonegotiation-type process. In various embodiments, an enhanced AN process can be used that is based on unformatted next page messages, physical signaling that supplements or even replaces conventional AN signaling, Layer 2 messaging, or any combination thereof. The result of such a process is an identification of an operating mode that can support a data rate lower than the MAC to which the variable-rate PHY is coupled.

At step 506, the selected operating mode can then used by the variable-rate PHY to operate at a data rate lower than the MAC. For example, the variable-rate PHY can select an operating mode that supports a data rate of 20 Gbit/s, while the MAC operates at a data rate of 40 Gbit/s. The operation of the variable-rate PHY at a data rate lower than the MAC can lead to a traffic imbalance. For this reason, the variable-rate PHY can be designed to monitor the traffic queues to determine, at step 508, whether the MAC needs to hold off from transmitting more data. If the monitoring does not indicate a need to hold off the MAC from transmitting, then the variable-rate PHY would continue to transmit data at the lower data rate as it is received.

In those instances, however, where the monitoring does indicate a need to hold off the MAC from transmitting, then the process proceeds to step 510 where the variable rate PHY asserts a carrier deferral signal (CRS) to the MAC. As illustrated in FIG. 4, the CRS is transmitted from variable-rate PHY 412 to MAC 414 in server 410. Conventionally, the CRS has been used in half-duplex links to alert a deference element in the MAC that the medium is occupied and that transmission must be deferred. In general, the CRS is used to hold off the MAC from transmitting anything. Effectively, from the MAC's perspective, when the CRS is asserted it means that the medium is not available.

In the context of the full-duplex link of the present invention, the CRS is used not to signal that the medium is occupied with incoming data, but that the transmission by server 410 is deferred due to a delay needed for variable-rate PHY 412 to transmit a backlog of outgoing data that is produced by its operation at a lower data rate than the MAC. In FIG. 4, this deferral scenario is illustrated by the figurative break in the communication path between MAC 414 in server 410 and transmitter 411 in variable-rate PHY 412. As noted, this transmission deferral is made in lieu of the completion of the transmission of previously provided data by MAC 414.

After the CRS is asserted at step 510, a determination is then made at step 512 as to whether the backpressuring of the MAC should continue. If it is determined at step 512 that the backpressuring of the MAC should continue, then the variable-rate PHY continues to assert the CRS to the MAC. After it is determined at step 512 that the backlog has been cleared and that the backpressuring of the MAC should not continue, then the variable-rate PHY can deassert the CRS at step 514. The deassertion of the CRS will then alert the MAC that the backlog has been cleared and that the transmission of data can resume. The MAC can then proceed to send data to the variable-rate PHY for transmission.

As has been described, the assertion and deassertion of the CRS leverages existing half-duplex functionality in the variable-rate PHY. The receipt of such a signal by the MAC is therefore accommodated without requiring a modification to the MAC.

As has been described, the lower data rate accommodated by the variable-rate PHY's use of legacy media can be accommodated by a backpressure mechanism that addresses the imbalance of data rates between the variable-rate PHY and the MAC. In one embodiment, a software mechanism can be used to simulate the receipt of a variable-rate PHY generated CRS. For example, if the MAC has a carrier deferral variable that is programmable, the software mechanism can "fake" the carrier deferral event and set the variable, thereby holding off the MAC. As such, the hardware CRS mechanism need not actually be triggered to achieve the results that are effected in software. In a further embodiment, a variable-rate PHY without the carrier deferral signal circuitry can be used with the software mechanism that simulates the receipt of a EEE PHY generated carrier deferral signal. As would be appreciated, the principles of the present invention are not dependent on the use of a CRS, but can be facilitated by any backpressure mechanism that is designed to hold off from further MAC transmission to the variable-rate PHY. For example, the backpressure can be applied via an alternate scheme like using a PAUSE frame that is sent up to the MAC.

In one embodiment, the variable-rate PHY can also be designed to include buffering on the PHY chip itself (or in a separate extender chip) to provide support for such variable-rate operation. This buffering can provide greater flexibility in addressing the imbalance of data rates and can alleviate or eliminate the need for backpressuring.

As noted, the principles of the present invention can be broadly applied to various contexts, such as backplane, twisted pair, and direct attach copper PHYs. The principles of the present invention can also be applied to a MACSec PHY. In general, the principles of the present invention promote the reuse of existing MACs (standardized and non-standardized) by pairing a plurality of modes of operation with an existing operating mode of the MAC.

These and other aspects of the present invention will become apparent to those skilled in the art by a review of the preceding detailed description. Although a number of salient features of the present invention have been described above, the invention is capable of other embodiments and of being practiced and carried out in various ways that would be apparent to one of ordinary skill in the art after reading the disclosed invention, therefore the above description should not be considered to be exclusive of these other embodiments. Also, it is to be understood that the phraseology and terminology employed herein are for the purposes of description and should not be regarded as limiting.

## Claims

1. A method in a physical layer device that is coupled to a media access control layer that operates at a predefined first data rate, comprising:
selecting an operating mode for said physical layer device based on identified characteristics of a communication channel, said selected operating mode supporting a second data rate that is less than said predefined first data rate of said media access control layer;
asserting, while said physical layer device is transmitting at said second data rate, a carrier deferral and/or backpressure signal from said physical layer device to said media access control layer, said carrier deferral and/or backpressure signal indicating to said media access control layer that transmission of data is to be deferred and/or adjusted; and/or
deasserting said carrier deferral signal after it is determined that an imbalance created by the difference between said predefined first data rate and said second data rate has been addressed.

2. The method of claim 1, further comprising:
identifying said characteristics of said communication channel that enables communication of said physical layer device with a link partner device.

3. The method of claim 2, wherein said predefined link rate is one of 10 Gbit/s, 40 Gbit/s and 100 Gbit/s.

4. The method of claim 3, wherein said selecting comprises selecting an operating mode that supports a second data rate greater than 1 Gbit/s when said predefined link rate is 10 Gbit/s, or selecting an operating mode that supports a second data rate greater than 10 Gbit/s when said predefined link rate is 40 Gbit/s, or selecting an operating mode that supports a second data rate greater than 40 Gbit/s when said predefined link rate is 100 Gbit/s.

5. The method of claim 2, wherein said identifying comprises identifying characteristics of a twisted pair link, backplane link, or direct attach copper link.

6. The method of claim 2, wherein said identifying comprises receiving an indication of said communication channel from a management interface.

7. The method of claim 2, wherein said identifying comprises measuring one or more channel characteristics by said physical layer device.

8. The method of claim 2, wherein said identifying comprises identifying in cooperation with said link partner device.

9. The method of claim 2, wherein said identifying comprises identifying a type of cabling.

10. The method of claim 1, wherein said communication channel couples said physical layer device to a link partner device, and said backpressure signal indicating to said media access control layer that transmission of data is to be adjusted due to an imbalance created by the difference between said predefined first data rate and said second data rate.

11. The method of claim 10, wherein said predefined link rate is one of 10 Gbit/s, 40 Gbit/s and 100 Gbit/s.

12. A physical layer device, comprising:
an interface to a media access control layer, said interface operating at a predefined first data rate;
a measurement module that measures one or more characteristics of a communication channel that links said physical layer device to a link partner device; and
a controller that selects an operating mode for said physical layer device based on said one or more measurements, said selected operating mode having a second data rate that is less than said predefined data rate, said controller also being designed to generate a backpressure signal that indicates to said media access control layer that transmission of data is to be adjusted due to an imbalance created by the difference between said predefined first data rate and said second data rate.

13. The device of claim 12, wherein said backpressure signal is a carrier deferral signal.

14. The device of claim 12, wherein said characteristic is a type of cable.

15. The device of claim 12, wherein said characteristic is a length of cable.
